(19) Europäisches Patentamt / European Patent Office / Office européen des brevets

(11) **EP 4 279 874 B1**

(12) **EUROPÄISCHE PATENTSCHRIFT**

(45) Veröffentlichungstag und Bekanntmachung des Hinweises auf die Patenterteilung:
**04.09.2024 Patentblatt 2024/36**

(21) Anmeldenummer: **22174216.6**

(22) Anmeldetag: **19.05.2022**

(51) Internationale Patentklassifikation (IPC):
**G01D 5/20** (2006.01)

(52) Gemeinsame Patentklassifikation (CPC):
**G01D 5/2053;** G01D 2205/18

(54) **INDUKTIVE POSITIONSMESSEINRICHTUNG**

INDUCTIVE POSITION MEASUREMENT DEVICE

DISPOSITIF INDUCTIF DE MESURE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.11.2023 Patentblatt 2023/47**

(73) Patentinhaber: **Dr. Johannes Heidenhain GmbH 83301 Traunreut (DE)**

(72) Erfinder:
- **HEINEMANN, Christoph**
  **83236 Übersee (DE)**
- **HEUMANN, Martin**
  **83278 Traunstein (DE)**
- **TIEMANN, Marc Oliver**
  **83329 Waging am See (DE)**

(56) Entgegenhaltungen:
WO-A1-03/074977      US-A- 4 757 244
US-A1- 2019 170 494      US-B2- 10 480 961

**Beschreibung**

## GEBIET DER TECHNIK

Die Erfindung betrifft eine induktive Positionsmesseinrichtung zur Bestimmung von Relativpositionen gemäß dem Anspruch 1.

Induktive Positionsmesseinrichtungen werden beispielsweise als Messgeräte zur Bestimmung der Relativposition zweier relativ zueinander verschiebbarer Elemente verwendet. Bei induktiven Positionsmesseinrichtungen sind häufig Erregerspulen und Empfängerspulen etwa in Form von Leiterbahnen auf einer gemeinsamen meist mehrlagigen Leiterplatte aufgebracht, wobei diese Einheit als Abtastelement bezeichnet werden kann. Diesem Abtastelement gegenüber befindet sich ein Teilungselement, auf dem beispielsweise Stege und Lücken als Teilungsstruktur angeordnet sind. Wenn an den Erregerspulen ein zeitlich wechselnder elektrischer Erregerstrom angelegt wird, werden in den Empfängerspulen während der Relativbewegung zwischen dem Teilungselement und dem Abtastelement von der Relativposition abhängige Signale erzeugt. Diese Signale werden dann in einer Auswerteelektronik weiterverarbeitet.

## STAND DER TECHNIK

Aus der US 10,480,961 B2 sind Beispiele für eine Positionsmesseinrichtung bekannt, bei denen unter Verwendung eines Resolver-Prinzips in Verbindung mit Reluktanzeffekten eine absolute Bestimmung von Relativpositionen möglich ist.

In der WO 03 074977 A1 wird ein Encoder zur Bestimmung einer absoluten Relativposition beschrieben. Dort wird durch eine vorgegebene Anzahl von Abtastelementen dieselbe Anzahl von Bits zur Ermittlung der absoluten Position erzeugt.

In der US4,757,244 B1 wird eine induktive Positionsmesseinrichtung offenbart, aufweisend ein Teilungselement mit Stegen und Lücken, wobei die Stege zunehmende Breiten in der Messrichtung aufweisen. Mehrere induktive Sensoren erzeugen Messsignale, aus denen eine absolute Messposition ermittelt wird.

US 2019/0170494 A1 offenbart eine induktive Positionsmesseinrichtung mit einem Teilungselement aufweisend gleichgroße Stege und Lücken, sowie ein Abtastelement mit zwei Empfangsspuren, die ungleiche Periodenlängen aufweisen und sich über unterschiedliche Längen erstrecken.

## ZUSAMMENFASSUNG DER ERFINDUNG

Der Erfindung liegt die Aufgabe zugrunde, eine induktive Positionsmesseinrichtung zu schaffen, durch die auf einfache Weise eine Bestimmung einer absoluten Relativposition in einer ersten Richtung möglich ist, die sich entlang von Empfängerspuren erstreckt.

Diese Aufgabe wird erfindungsgemäß durch die Merkmale des Anspruches 1 gelöst.

Die induktive Positionsmesseinrichtung weist ein Abtastelement und ein Teilungselement auf, wobei das Teilungselement relativ zum Abtastelement beziehungsweise entlang einer ersten Richtung linear verschieblich angeordnet ist. Das Abtastelement weist zumindest eine Erregerleitung auf. Weiterhin weist das Abtastelement eine erste Empfängerspur auf, die zumindest eine Empfängerleitung umfasst, welche gemäß einem ersten periodischen Muster entlang der ersten Richtung verläuft und sich zumindest über eine Länge L erstreckt, wobei das erste periodische Muster eine erste Periodenlänge aufweist.

Das Abtastelement weist zudem eine zweite Empfängerspur auf, die zumindest eine Empfängerleitung umfasst, welche gemäß einem zweiten periodischen Muster entlang der ersten Richtung verläuft und sich zumindest über die gleiche Länge L erstreckt, wobei das zweite periodische Muster eine zweite Periodenlänge aufweist, und wobei die erste Periodenlänge ungleich der zweiten Periodenlänge ist.

Das Teilungselement umfasst eine Teilungsspur, die entlang der ersten Richtung Teilungsstrukturen aufweist, die aus insbesondere alternierend angeordneten Stegen und Lücken gebildet sind. Dabei weisen

    a) die Stege in der ersten Richtung unterschiedliche Breiten auf und /oder

    b) die Lücken unterschiedliche Tiefen auf oder in der ersten Richtung unterschiedliche Breiten auf.

Die Positionsmesseinrichtung ist so konfiguriert, dass ein durch die Teilungsspur von der zumindest einen Erregerleitung erzeugtes elektromagnetisches Feld modulierbar ist. Durch die Empfängerleitung der ersten Empfängerspur ist ein erstes Signal mit einer ersten Periodenlänge P1.1 erzeugbar und durch die Empfängerleitung der zweiten Empfängerspur ist ein zweites Signal mit einer zweiten Periodenlänge P1.2 erzeugbar. Dabei ist das n-fache der ersten Periodenlänge P1.1 gleich dem m-fachen der zweiten Periodenlänge P1.2, wobei m und n teilerfremd sind und das n-fache der ersten Periodenlänge P1.1 beziehungsweise das m-fache der zweiten Periodenlänge P1.2 kleiner oder gleich der Länge L ist. Somit gilt:

$$n \cdot P1.1 = m \cdot P1.2 \leq L, \text{ mit } (n \perp m;\ n,\ m \in \mathbb{N})$$

m und n sind demnach zwei natürliche Zahlen, die keinen gemeinsamen Primfaktor haben. Demnach kann m oder n auch der Wert 1 annehmen. Eine Periodenlänge P1.1, P1.2 entspricht insbesondere einer geometrischen linearen Ausdehnung.

Mit der Positionsmesseinrichtung kann durch die Empfängerleitung der ersten Empfängerspur und durch die Empfängerleitung der zweiten Empfängerspur eine absolute Position des Teilungselements relativ zum Abtastelement, insbesondere nach dem Nonius-Prinzip, detektiert werden.

Das erste und / oder das zweite periodische Muster kann einen sinusförmigen Verlauf aufweisen. Die erste Empfängerspur weist insbesondere zumindest eine Empfängerleitung auf, welche mehrere in der ersten Richtung aneinander gereihte Windungen aufweist. Ebenso kann die zumindest eine Empfängerleitung der zweiten Empfängerspur mehrere in der ersten Richtung aneinander gereihte Windungen aufweisen oder aber nur eine Windung umfassen. Insbesondere kann die Empfängerleitung der ersten Empfängerspur mehr Windungen aufweisen als die Empfängerleitung der zweiten Empfängerspur.

Vorteilhafterweise ist das n-fache der ersten Periodenlänge P1.1 beziehungsweise das m-fache der zweiten Periodenlänge P1.2 gleich der Länge L.

$$n \cdot P1.1 = L$$

$$m \cdot P1.2 = L,$$

Mit Vorteil weist die erste Empfängerspur zumindest zwei Empfängerleitungen auf, durch die zwei phasenversetzte erste Signale mit jeweils der ersten Periodenlänge P1.1 erzeugbar sind. Die zumindest zwei Empfängerleitungen verlaufen dann jeweils gemäß dem ersten periodischen Muster mit der ersten Periodenlänge P1.1 entlang der ersten Richtung.

In weiterer Ausgestaltung der Erfindung weist die zweite Empfängerspur zumindest zwei Empfängerleitungen auf, durch die phasenversetzte zweite Signale mit jeweils der zweiten Periodenlänge P1.2 erzeugbar sind. Die zumindest zwei Empfängerleitungen verlaufen gemäß dem zweiten periodischen Muster mit der zweiten Periodenlänge P1.2 entlang der ersten Richtung.

Vorteilhafterweise sind die Empfängerspuren in einer zweiten Richtung, die orthogonal zur ersten Richtung orientiert ist, übereinander liegend angeordnet. Insbesondere können die Empfängerspuren in übereinander liegenden Lagen eines als Leiterplatte ausgestalteten Abtastelements angeordnet sein.

Mit Vorteil weist das erste periodische Muster der Empfängerleitung der ersten Empfängerspur die erste Periodenlänge P1.1 auf und das zweite periodische Muster der Empfängerleitung der zweiten Empfängerspur die zweite Periodenlänge P1.2. Folglich haben in diesem Fall die ersten Signale und das erste periodische Muster die gleich große erste Periodenlänge P1.1. Ebenso haben die zweiten Signale und das zweite periodische Muster die gleich große zweite Periodenlänge P1.2.

Üblicherweise sind das Abtastelement und das Teilungselement einander gegenüber liegend angeordnet und durch einen Luftspalt, der sich in einer zweiten Richtung erstreckt, voneinander beabstandet. In weiterer Ausgestaltung der Erfindung ist die erste Periodenlänge P1.1 kleiner als die zweite Periodenlänge P1.2.

$$P1.1 < P1.2$$

Die zweite Empfängerspur ist in der zweiten Richtung, die orthogonal zur ersten Richtung orientiert ist, mit größerem Abstand zum Teilungselement angeordnet als die erste Empfängerspur.

Die zumindest eine Empfängerleitung der zweiten Empfängerspur kann sich über mindestens das Dreifache der zweiten Periodenlänge P1.2 erstrecken. Demnach gilt:

$$L \geq 3 \cdot P1.2$$

Vorteilhafterweise weist das Teilungselement eine um eine Achse, die parallel zur ersten Richtung orientiert ist, eine rotationssymmetrische Form auf. Vorteilhaft weist die Teilungsspur entlang der ersten Richtung alternierend angeordnete Stege und Lücken auf. Alternativ kann die Teilungsspur aus einer Teilungsstruktur, die entlang der ersten Richtung alternierend angeordnete, elektrisch leitfähige und nichtleitfähige Bereiche aufweist, gebildet werden. Die Teilungsstruktur kann auch andere ferromagnetische Geometrien umfassen.

Wenn das Teilungselement Lücken mit unterschiedliche Tiefen aufweist, kann das einerseits dadurch erreicht werden, dass das Teilungselement entlang der ersten Richtung betrachtet, stets einen konstanten Außendurchmesser aufweist und die Lücken entsprechend unterschiedlich tief ausgestaltet sind. Alternativ oder ergänzend kann aber auch die Variation der Tiefe durch unterschiedlich hohe Stege erreicht werden, wobei dann der Außendurchmesser des Teilungselements entlang der ersten Richtung nicht konstant ist.

Vorteilhafterweise unterschreitet die kleinste Lücke des Teilungselements nicht eine Breite von 0,2 mm, insbesondere nicht 0,5 mm.

Mit Vorteil weist das Teilungselement in der ersten Richtung mindestens eine Ausdehnung M auf, die größer ist als die Länge L plus die doppelte erste Periodenlänge P1.1:

$$M \geq L + 2 \cdot P1.1$$

Gemäß einer vorteilhaften Ausgestaltung der Erfindung gilt insbesondere:

$$M \geq L + 4 \cdot P1.1,$$

insbesondere kann gelten:

$$M \geq 2 \cdot L$$

In weiterer Ausgestaltung der Erfindung ist das Teilungselement so ausgestaltet, dass zumindest innerhalb eines Bereichs des Teilungselements die Summe aus einer Breite eines Steges und einer Breite einer dazu benachbarten Lücke ungleich der Summe aus einer Breite eines anderen Steges und einer Breite einer dazu benachbarten Lücke ist.

Vorteilhafterweise ist die erste Periodenlänge P1.1 größer als die größte Breite eines Steges beziehungsweise die Breite des größten Steges. Diese Betrachtung gilt für den Fall, dass die Breite der Stege entlang der ersten Richtung variiert. Alternativ oder ergänzend ist zudem die erste Periodenlänge P1.1 größer als die größte Breite einer Lücke.

In weiterer Ausgestaltung der Erfindung weist jeder Steg eine gleich große Breite auf, während die Breiten der dazwischen liegenden Lücken unterschiedlich groß sind.

Vorteilhafte Ausbildungen der Erfindung entnimmt man den abhängigen Ansprüchen.

Weitere Einzelheiten und Vorteile der erfindungsgemäßen induktiven Positionsmesseinrichtung ergeben sich aus der nachfolgenden Beschreibung zweier Ausführungsbeispiele anhand der beiliegenden Figuren.

**KURZE BESCHREIBUNG DER ZEICHNUNGEN**

Figur 1　　eine Seitenansicht einer Positionsmesseinrichtung zur Bestimmung einer Relativposition,

Figur 2　　eine Vorderansicht auf die Positionsmesseinrichtung,

Figur 3　　eine Draufsicht auf eine erste Empfängerspur und eine Erregerleitung eines Abtastelements,

Figur 4　　eine Draufsicht auf nur zwei Empfängerleitungen der ersten Empfängerspur des Abtastelements und die Erregerleitung,

Figur 5　　eine Draufsicht auf eine zweite Empfängerspur und eine Erregerleitung des Abtastelements,

Figur 6　　eine Draufsicht auf nur eine Empfängerleitung der zweiten Empfängerspur des Abtastelements und die Erregerleitung,

Figur 7　　die Signalverläufe einer ersten Empfängerleitung und einer zweiten Empfängerleitung,

Figur 8　　eine Seitenansicht einer Positionsmesseinrichtung zur Bestimmung einer Relativposition gemäß einem zweiten Ausführungsbeispiel,

Figur 9　　eine Vorderansicht auf die Positionsmesseinrichtung gemäß dem zweiten Ausführungsbeispiel.

**BESCHREIBUNG DER AUSFÜHRUNGSFORMEN**

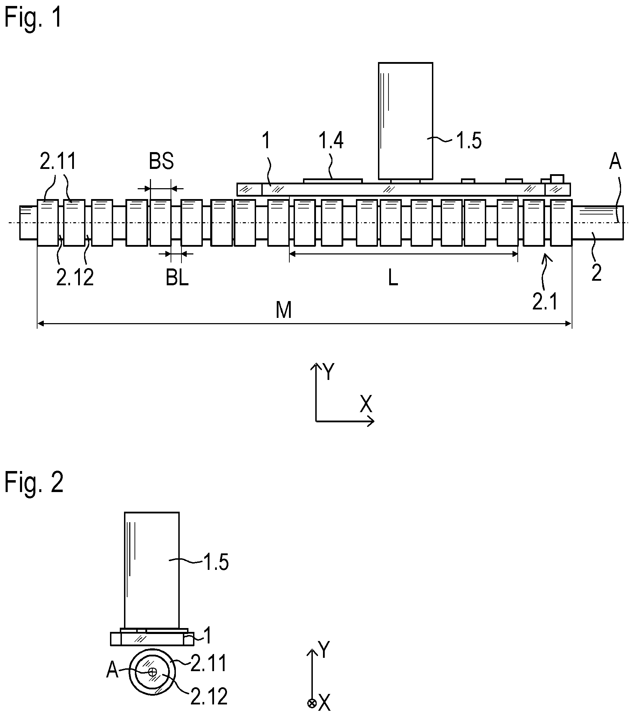

Die Erfindung wird anhand einer Positionsmesseinrichtung beschrieben, welche zur Erfassung einer Relativposition zwischen einem Abtastelement 1 und einem entlang einer ersten Richtung X verschieblichen Teilungselement 2 beziehungsweise einer Skala bestimmt ist (Figuren 1 und 2).

Das Teilungselement 2 ist relativ zum Abtastelement 1 so positioniert, dass sich das Abtastelement 1 und das Teilungselement 2 mit einem Luftspalt, der sich in einer zweiten Richtung Y erstreckt, einander gegenüber liegen.

Das Teilungselement 2 ist als ein um eine Achse A rotationssymmetrischer Körper ausgestaltet. Er kann wie im vorgestellten Ausführungsbeispiel monolithisch aus einem Metallwerkstoff, z. B. aus Messing, hergestellt sein. Das Teilungselement 2 weist eine Teilungsspur 2.1 auf. Die Teilungsspur 2.1 erstreckt sich entlang der ersten Richtung X (Messrichtung) und weist Stege 2.11 und dazwischen liegende Lücken 2.12 auf. Die Teilungsspur 2.1 besteht demnach aus einer Abfolge von alternierend angeordneten Stegen 2.11 und Lücken 2.12. Im vorgestellten Ausführungsbeispiel weist jeder Steg 2.11 eine Breite BS von 3,65 mm auf. Dagegen weisen die Lücken 2.12 entlang der ersten Richtung X unterschiedliche Breiten BL auf. Hier beträgt die Breite BL maximal ca. 2,66 mm und minimal ca. 0,33 mm. Das Teilungselement 2 ist im vorgestellten Ausführungsbeispiel durch einen spanabhebenden Drehprozess hergestellt, wobei die Stege 2.11 scharfe Kanten an den die Stege 2.11 axial begrenzenden Flächen aufweisen. Alternativ kann das Teilungselement 2 aber auch so ausgestaltet sein, dass vergleichsweise runde Übergänge zwischen den Stegen 2.11 und den Lücken 2.12 vorliegen.

Das Abtastelement 1 umfasst eine Leiterplatte 1.1, welche mehrere Lagen aufweist, sowie elektronische Bauteile 1.4, die auf der Leiterplatte 1.1 montiert sind. Zudem ist auf dem Abtastelement 1 ein Steckerelement 1.5 angeordnet, an das ein Kabel angeschlossen werden kann, so dass auf diese Weise das Abtastelement 1 mit einer Folgeelektronik verbunden werden kann. Das Abtastelement 1 dient zur Abtastung des Teilungselements 2.

Zur Bestimmung der Relativposition weist das Abtastelement 1 eine erste Empfängerspur 1.1 sowie eine zweite Empfängerspur 1.2 auf, wobei die Empfängerspuren 1.1, 1.2 auf unterschiedlichen Ebenen beziehungsweise Lagen angeordnet sind.

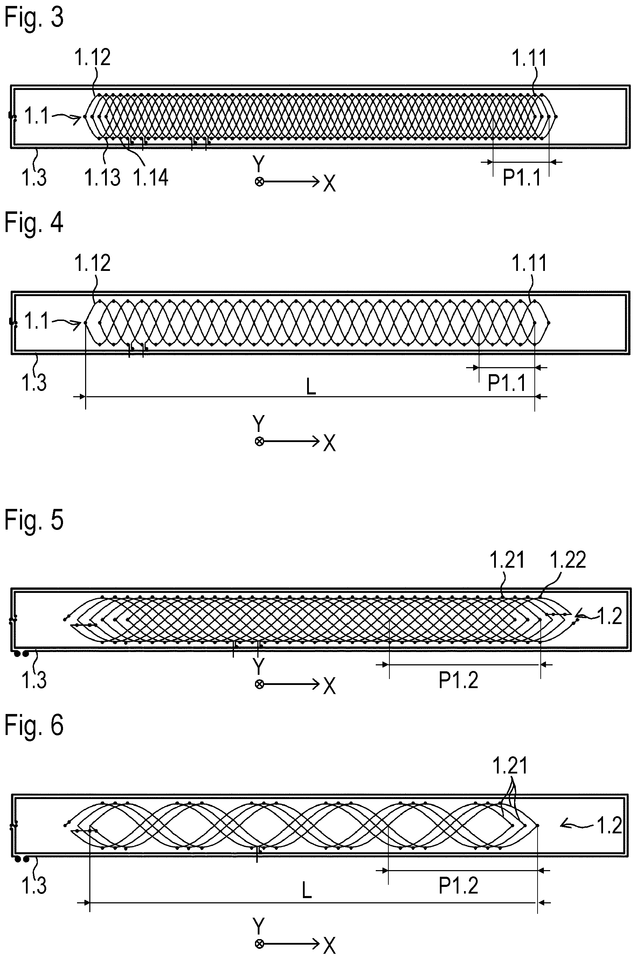

In der Figur 3 ist die erste Empfängerspur 1.1 in einer Detailansicht vergrößert gezeigt. Diese umfasst eine erste Empfängerleitung 1.11, eine zweite Empfängerleitung 1.12, eine dritte Empfängerleitung 1.13 und eine vierte Empfängerleitung 1.14. Die erste Empfängerspur 1.1 ist von einer Erregerleitung 1.3 umschlossen.

In der Figur 4 ist zur übersichtlicheren Erläuterung nur die erste Empfängerleitung 1.11 und die zweite Empfängerleitung 1.12 der ersten Empfängerspur 1.1 dargestellt. Die in der Figur 4 dargestellten Empfängerleitungen 1.11, 1.12 liefern um 90° phasenversetzte Signale.

Die erste Empfängerspur 1.1 umfasst im vorgestellten Ausführungsbeispiel vier Empfängerleitungen 1.11, 1.12, 1.13, 1.14 die in der ersten Richtung X versetzt angeordnet sind, so dass diese dem Versatz entsprechend vier phasenverschobene Signale liefern können. Die Empfängerleitungen 1.11, 1.12, 1.13, 1.14 sind hier als Leiterbahnen ausgestaltet und verlaufen mit Vias verbunden in unterschiedlichen Lagen der Leiterplatte beziehungsweise des Abtastelements 1, so dass an Kreuzungspunkten unerwünschte Kurzschlüsse vermieden werden. Wenngleich genau genommen jede der Empfängerleitungen 1.11, 1.12, 1.13, 1.14 aus vielen Leiterstücken, die jeweils auf zwei Ebenen beziehungsweise Lagen verteilt und aneinandergereiht sind, wird im Folgenden eine derartige Struktur zusammenfassend als eine Empfängerleitung 1.11, 1.12, 1.13, 1.14 bezeichnet.

Die Empfängerleitungen 1.11, 1.12, 1.13, 1.14 weisen einen räumlich periodischen Verlauf auf, der im Wesentlichen sinusförmig beziehungsweise sinusartig ausgestaltet ist, wobei alle Empfängerleitungen 1.11, 1.12, 1.13, 1.14 der ersten Empfängerspur 1.1 eine erste Periodenlänge P1.1 (Figur 3) aufweisen. Jede Empfängerleitung 1.11, 1.12, 1.13, 1.14 der ersten Empfängerspur 1.1 erstreckt sich über eine Länge L, die ein Vielfaches der ersten Periodenlänge P1.1 ist:

$$L = n \cdot P1.1 \text{ mit } n \in \mathbb{N}$$

Im vorgestellten Ausführungsbeispiel gilt, dass die Länge L acht-mal (n = 8) so groß ist wie die erste Periodenlänge P1.1, wobei in diesem Beispiel die erste Periodenlänge P1.1 einen Wert von 5,145 mm annimmt, so dass hier die Länge L 41,16 mm beträgt.

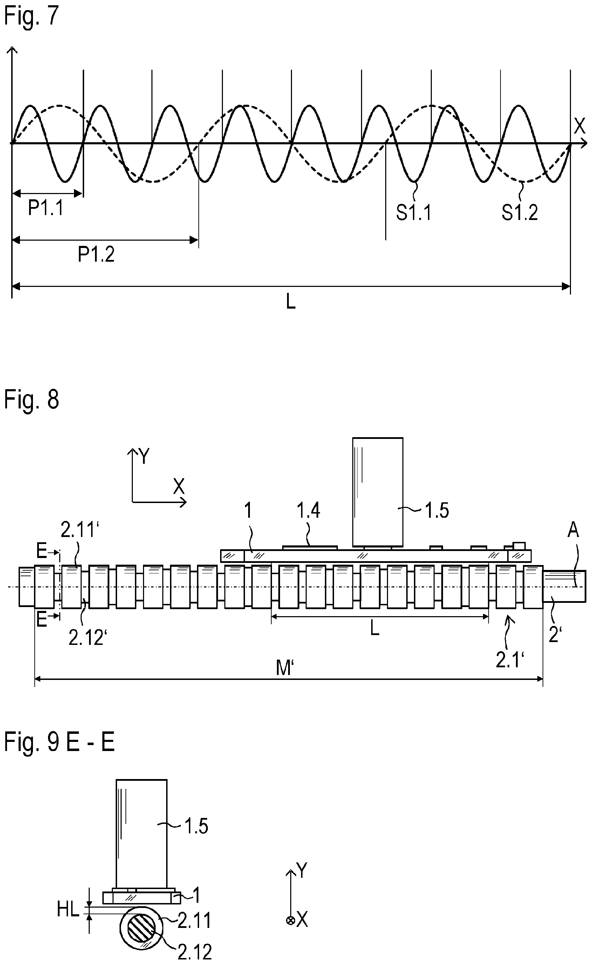

Im vorgestellten Ausführungsbeispiel sind innerhalb der ersten Empfängerspur 1.1 benachbarte Empfängerleitungen 1.11, 1.12, 1.13, 1.14 gemäß der Figur 3 um $\frac{1}{8}$ der vollen Sinusperiode also der ersten Periodenlänge P1.1 entlang der ersten Richtung X zueinander versetzt angeordnet. Die Empfängerleitungen 1.11, 1.12, 1.13, 1.14 sind elektrisch so verschaltet, dass diese zum einen 0° und 90°-Signale liefern und zum anderen 45° und 135°-Signale. Aus den 0° und 90°-Signalen kann ein erstes Positionssignal bestimmt werden und aus den 45° und 135°-Signalen kann ein bezüglich des ersten Positionssignals redundantes zweites Positionssignal bestimmt werden. Durch die ersten Empfängerleitungen 1.11, 1.12, 1.13, 1.14 kann im Grunde ein vergleichsweise hochauflösendes Inkrementalsignal bei einer Relativbewegung des Teilungselements 2 gegenüber dem Abtastelement 1 erzeugt werden. In der Figur 7 ist beispielhaft ein Verlauf eines ersten Signals S1.1 gezeigt, das durch eine Empfängerleitung 1.11, 1.12, 1.13, 1.14 der ersten Empfängerspur 1.1 erzeugt wird, wenn das Teilungselement 2 um einen Verfahrweg der Länge L verschoben wird.

In den Figuren 5 und 6 ist eine zweite Empfängerspur 1.2 gezeigt. Diese befindet sich auf zwei Lagen des Abtastelements 1 beziehungsweise der Leiterplatte, so dass die zweite Empfängerspur 1.2 in der zweiten Richtung Y versetzt zur ersten Empfängerspur 1.1 angeordnet ist. Die erste Empfängerspur 1.1 ist zudem überlappend in Bezug auf die zweite Empfängerspur 1.2 angeordnet. Im vorgestellten Ausführungsbeispiel befindet sich die zweite Empfängerspur 1.2 weiter weg von dem Teilungselement 2 beziehungsweise der Achse A als die erste Empfängerspur 1.1.

Die zweite Empfängerspur 1.2 umfasst im vorgestellten Ausführungsbeispiel gemäß der Figur 5 eine fünfte Empfängerleitung 1.21 und eine sechste Empfängerleitung 1.22, also zwei Empfängerleitungen 1.21, 1.22, die in der ersten Richtung X versetzt zueinander angeordnet sind, so dass diese dem Versatz entsprechend zwei um 90° phasenverschobene Signale liefern können. Die Empfängerleitungen 1.21, 1.22 sind als Leiterbahnen ausgestaltet und verlaufen auch hier mit Vias verbunden in unterschiedlichen Lagen der Leiterplatte beziehungsweise des Abtastelements 1. Sowohl die fünfte Empfängerleitung 1.21 als auch die sechste Empfängerleitung 1.22 sind hier dreifach ausgeführt und seriell verschaltet. Dabei wird die fünfte Empfängerleitung 1.21 (0° Empfängerleitung) und die sechste Empfängerleitung 1.22 (90° Empfängerleitung) jeweils um +30° und -30° elektrisch verdreifacht. Somit wird durch die fünfte Empfängerleitung 1.21 die Lage des Teilungselements 2 an den Positionen - 30°, 0° und +30° (bezogen auf die Phasenlage der empfangenen Signale) erfasst. Entsprechend wird durch die sechste Empfängerleitung 1.22 die Lage des Teilungselements 2 an den Positionen 60°, 90° und 120° (bezogen auf die Phasenlage der empfangenen Signale) detektiert.

Die Leiterbahnstücke der fünften Empfängerleitung 1.21 sind, wie in der Figur 6 zu sehen am linken Ende der zweiten Empfängerspur 1.2 seriell zusammengeschaltet. Dagegen ist in der sechsten Empfängerleitung 1.22 die entsprechende Verschaltung am rechten Ende der zweiten Empfängerspur 1.2 vorgenommen (Figur 5). Durch diese serielle Verschaltung ergibt sich im Ergebnis jeweils ein 0°-Signal und ein 90°-Signal mit erhöhten Signalamplituden.

Eine Erhöhung der Signalamplituden ist besonders für die zweite Empfängerspur 1.2 vorteilhaft, da diese in der zweiten Richtung Y einen größeren Abstand zum Teilungselement 2 aufweist als die erste Empfängerspur 1.1. In der Figur 7 ist beispielhaft ein Verlauf eines zweiten Signals S1.2 gezeigt, das durch eine Empfängerleitung 1.21, 1.22 der zweiten Empfängerspur 1.2 erzeugt wird, wenn das Teilungselement 2 um einen Verfahrweg der Länge L verschoben wird.

Auch die fünfte und sechste Empfängerleitung 1.21, 1.22 weisen einen räumlich periodischen Verlauf auf, der im Wesentlichen sinusförmig beziehungsweise sinusartig ausgestaltet ist, wobei beide Empfängerleitungen 1.21, 1.22 der zweiten Empfängerspur 1.2 eine zweite Periodenlänge P1.2 (Figur 6) aufweisen. Im vorgestellten Ausführungsbeispiel beträgt die zweite Periodenlänge P1.2 13,72 mm. Im vorgestellten Ausführungsbeispiel ist die zweite Periodenlänge P1.2 größer als die erste Periodenlänge P1.1, somit ist also die erste Periodenlänge P1.1 ungleich der zweiten Periodenlänge P1.2. Die fünfte und die sechste Empfängerleitung 1.21, 1.22 erstrecken sich jeweils über eine Länge L, die ein Vielfaches der zweiten Periodenlänge P1.2 ist:

$$L = m \cdot P1.2, \text{ mit } m \in \mathbb{N}$$

Im vorgestellten Ausführungsbeispiel gilt, dass die Länge L drei-mal (m = 3) so groß ist wie die zweite Periodenlänge P1.2, entsprechend ist auch die Länge L = 41,16 mm = 13,72 mm 3.

Im zusammengebauten Zustand gemäß der Figur 1 stehen sich das Abtastelement 1 und das Teilungselement 2 mit einem Luftspalt gegenüber, so dass bei einer Relativbewegung zwischen dem Teilungselementen 2 und dem Abtastelement 1 in den Empfängerleitungen 1.11, 1.12, 1.13, 1.14, 1.21, 1.22 jeweils ein von der Relativposition abhängiges Signal durch Induktionseffekte erzeugbar ist. Voraussetzung für die Bildung von entsprechenden Signalen ist, dass die Erregerleitung 1.3 ein zeitlich wechselndes elektromagnetisches Erregerfeld im Bereich der jeweilig abgetasteten Teilungsstrukturen 2.1 erzeugen. Im dargestellten Ausführungsbeispiel ist die Erregerleitung 1.3 als mehrere planar-parallele stromdurchflossene Einzel-Leiterbahnen ausgebildet. Das Abtastelement 1 weist eine elektronische Schaltung mit den elektronischen Bauteilen 1.4 auf. Die elektronische Schaltung kann beispielsweise auch einen ASIC-Baustein umfassen. Diese elektronische Schaltung des Abtastelements 1 arbeitet nicht nur als Auswerteelement, sondern auch als Erregerkontrollelement, unter dessen Kontrolle der Erregerstrom generiert beziehungsweise erzeugt wird, welcher dann durch die Erregerleitung 1.3 fließt.

Wird die Erregerleitung 1.3 bestromt, so bildet sich um die Erregerleitung 1.3 ein schlauch- bzw. zylinderförmig orientiertes elektromagnetisches Feld aus. Die Feldlinien des resultierenden elektromagnetischen Feldes verlaufen um die Erregerleitung 1.3, wobei die Richtung der Feldlinien in bekannter Art und Weise von der Stromrichtung in der Erregerleitung 1.3 abhängt. Im Bereich der Stege 2.11 werden Wirbelströme induziert, so dass jeweils eine von der Relativposition abhängige Modulation des Feldes erreicht wird. Entsprechend kann durch die Empfängerleitungen 1.11, 1.12, 1.13, 1.14, 1.21, 1.22 jeweils die Relativposition gemessen werden.

Die erste Empfängerspur 1.1 mit ihren Empfängerleitungen 1.11, 1.12, 1.13, 1.14, die mit einer kleineren ersten Periodenlänge P1.1 verlaufen, tastet das Teilungselement 2 ab, so dass durch die erste Empfängerspur 1.1 eine vergleichsweise feine Bestimmung der Relativposition erreichbar ist. Gleichzeitig tastet die darüber liegende zweite Empfängerspur 1.2 mit ihren Empfängerleitungen 1.21, 1.22, die mit einer gröberen zweiten Periodenlänge P1.2 verlaufen, das Teilungselement 2 ab. Durch die zweite Empfängerspur 1.2 ist somit eine vergleichsweise grobe Bestimmung der Relativposition erreichbar. Im Übrigen weisen alle Empfängerleitungen 1.11, 1.12, 1.13, 1.14 der ersten Empfängerspur 1.1 jeweils die gleiche erste Periodenlänge P1.1 auf und die Empfängerleitungen 1.21, 1.22 der zweiten Empfängerspur 1.2 weisen jeweils die gleiche zweite Periodenlänge P1.2 auf. Die Abtastung beider Empfängerspuren 1.1, 1.2 erfolgt gleichzeitig, es ist keine Umschaltung zwischen einzelnen Empfängerspuren 1.1, 1.2 erforderlich. Ein von einer Empfängerleitung 1.11, 1.12, 1.13, 1.14 der ersten Empfängerspur 1.1 empfangenes Signal S1.1 und ein von einer Empfängerleitung 1.21, 1.22 der zweiten Empfängerspur 1.2 empfangenes Signal S1.2 sind in der Figur 7 dargestellt. Daraus ist ersichtlich, dass bei einer Relativbewegung des Teilungselements 2 entlang der ersten Richtung X über einen Verfahrweg der Länge L, also hier über 41,16 mm hinweg, durch die Empfängerleitungen 1.11, 1.12, 1.13, 1.14 der ersten Empfängerspur 1.1 Signale S1.1 mit acht (n = 8) vollen Signalperioden erzeugt werden, während über den selben Verfahrweg hinweg durch die Empfängerleitungen 1.21, 1.22 der zweiten Empfängerspur 1.2 Signale S1.2 mit lediglich drei (m = 3) Signalperioden erzeugt werden. Die empfangenen Signale S1.1, S1.2 werden mit Hilfe eines Schwebungs- beziehungsweise Noniusalgorithmus verknüpft, so dass durch beide Signale S1.1, S1.2 die Relativposition zwischen dem Abtastelement 1 und dem Teilungselement 2 absolut bestimmt werden kann. Dabei ist es von Bedeutung, dass das n-fache der ersten Periodenlänge P1.1 und das m-fache der zweiten Periodenlänge P1.2 der jeweils erzeugten elektrischen Signale S1.1, S1.2 gleich groß sind, wobei m und n teilerfremd sind.

$$n \cdot P1.1 = m \cdot P1.2 = L, \text{ mit } (n \perp m)$$

Im vorgestellten Ausführungsbeispiel weist also das erste periodische Muster der Empfängerleitungen 1.11, 1.12, 1.13, 1.14 der ersten Empfängerspur 1.1 die erste Periodenlänge P1.1 auf und das zweite periodische Muster der Empfängerleitungen 1.21, 1.22 der zweiten Empfängerspur 1.2 die zweite Periodenlänge P1.2. Zudem weist die von den Empfängerleitungen 1.11, 1.12, 1.13, 1.14 der ersten Empfängerspur 1.1 erzeugten Signale S1.1 die erste Periodenlänge P1.1 auf und die von den Empfängerleitungen 1.21, 1.22 der zweiten Empfängerspur 1.2 erzeugten Signale S1.2 die zweite Periodenlänge P1.2.

Anhand der Figuren 8 und 9 kann ein zweites Ausführungsbeispiel erläutert werden. Das zweite Ausführungsbeispiel unterscheidet sich vom ersten dadurch, dass ein modifiziertes Teilungselement 2' verwendet wird. Dieses weist eine Teilungsspur 2.1' auf, die sich entlang der ersten Richtung X erstreckt mit Stegen 2.11' und dazwischen liegenden Lücken 2.12'. Im zweiten Ausführungsbeispiel weisen die Lücken 2.12' entlang der ersten Richtung X unterschiedliche Tiefen HL (Figur 9) auf, also im Bereich der Abtastung unterschiedliche Abstände zum Abtastelement 1. Dagegen weist jeder Steg 2.11' im Bereich der Abtastung den gleichen Abstand zum Abtastelement 1 auf. Durch die Anordnung der unterschiedlich tiefen Lücken 2.12' ist eine Positionsinformation im Teilungselement 2' abgebildet.

Durch die rotationssymmetrische Ausgestaltung des Teilungselements 2, 2' ist es möglich, dass eine genaue Bestimmung der Relativposition erreicht wird, auch wenn bedingt durch die Einbausituation oder durch Driftbewegungen das Teilungselements 2, 2' während einer Messung um die Achse A gedreht wird.

**Patentansprüche**

1. Induktive Positionsmesseinrichtung, die ein Abtastelement (1) und ein Teilungselement (2; 2') aufweist, wobei das Teilungselement (2; 2') relativ zum Abtastelement (1) in einer ersten Richtung (X) verschieblich angeordnet ist, und

   - das Abtastelement (1)

      ¬ zumindest eine Erregerleitung (1.3) aufweist,
      ¬ eine erste Empfängerspur (1.1) aufweist, die zumindest eine Empfängerleitung (1.11, 1.12, 1.13, 1.14) umfasst, welche gemäß einem ersten periodischen Muster entlang der ersten Richtung (X) verläuft und sich zumindest über eine Länge (L) erstreckt, wobei das erste periodische Muster eine erste Periodenlänge (P1.1) aufweist und
      ¬ eine zweite Empfängerspur (1.2) aufweist, die zumindest eine Empfängerleitung (1.21, 1.22) umfasst, welche gemäß einem zweiten periodischen Muster entlang der ersten Richtung (X) verläuft und sich zumindest über die gleiche Länge (L) erstreckt, wobei das zweite periodische Muster eine zweite Periodenlänge (P1.2) aufweist, wobei

      ¬ die erste Periodenlänge (P1.1) ungleich der zweiten Periodenlänge (P1.2) ist, wobei

   - das Teilungselement (2; 2') eine Teilungsspur (2.1; 2.1') umfasst, die entlang der ersten Richtung (X) Teilungsstrukturen aufweist, die aus Stegen (2.11; 2.11') und Lücken (2.12, 2.12') gebildet sind, wobei

      ¬ die Stege (2.11, 2.11') in der ersten Richtung (X) unterschiedliche Breiten (BS) aufweisen oder
      ¬ die Lücken (2.12; 2.12') unterschiedliche Tiefen (HL) oder in der ersten Richtung (X) unterschiedliche Breiten (BL) aufweisen, wobei

   die Positionsmesseinrichtung so konfiguriert ist, dass ein durch die Teilungsspur (2.1, 2.1') von der zumindest einen Erregerleitung (1.3) erzeugtes elektromagnetisches Feld modulierbar ist, wobei

      durch die Empfängerleitung (1.11, 1.12, 1.13, 1.14) der ersten Empfängerspur (1.1) ein erstes Signal (S1.1) mit der ersten Periodenlänge (P1.1) erzeugbar ist und durch die Empfängerleitung (1.21, 1.22) der zweiten Empfängerspur (1.2) ein zweites Signal (S1.2) mit der zweiten Periodenlänge (P1.2) erzeugbar ist, wobei

   das n-fache der ersten Periodenlänge (P1.1) gleich dem m-fachen der zweiten Periodenlänge (P1.2) ist, wobei m und n teilerfremd sind und das n-fache der ersten Periodenlänge (P1.1) beziehungsweise das m-fache der zweiten Periodenlänge (P1.2) kleiner oder gleich der Länge (L) ist.

2. Induktive Positionsmesseinrichtung gemäß dem Anspruch 1, wobei die erste Empfängerspur (1.1) zumindest zwei Empfängerleitungen (1.11, 1.12, 1.13, 1.14) aufweist, durch die erste Signale (S1.1) mit jeweils der ersten Periodenlänge (P1.1) erzeugbar sind.

3. Induktive Positionsmesseinrichtung gemäß dem Anspruch 1 oder 2, wobei die zweite Empfängerspur (1.2) zumindest zwei Empfängerleitungen (1.21, 1.22) aufweist, durch die jeweils ein zweites Signal (S1.2) mit der zweiten Periodenlänge (P1.2) erzeugbar ist.

4. Induktive Positionsmesseinrichtung gemäß einem der vorhergehenden Ansprüche, wobei die Empfängerspuren (1.1, 1.2) in einer zweiten Richtung (Y), die orthogonal zur ersten Richtung (X) orientiert ist, übereinander liegend angeordnet sind.

5. Induktive Positionsmesseinrichtung gemäß einem der vorhergehenden Ansprüche, wobei sich die zumindest eine Empfängerleitung (1.21, 1.22) der zweiten Empfängerspur (1.2) über mindestens das Dreifache der zweiten Periodenlänge (P1.2) erstreckt.

6. Induktive Positionsmesseinrichtung gemäß einem der vorhergehenden Ansprüche, wobei die erste Periodenlänge (P1.1) kleiner ist als die zweite Periodenlänge (P1.2) und die zweite Empfängerspur (1.2) in einer zweiten Richtung (Y), die orthogonal zur ersten Richtung (X) orientiert ist, mit größerem Abstand zum Teilungselement (2, 2') angeordnet ist als die erste Empfängerspur (1.1).

7. Induktive Positionsmesseinrichtung gemäß einem der vorhergehenden Ansprüche, wobei das Teilungselement (2; 2') eine um eine Achse (A), die parallel zur ersten Richtung (X) orientiert ist, eine rotationssymmetrische Form aufweist.

8. Induktive Positionsmesseinrichtung gemäß einem der vorhergehenden Ansprüche, wobei das Teilungselement (2; 2') in der ersten Richtung (X) mindestens eine Ausdehnung (M, M') aufweist, die größer ist als die Länge (L) plus die doppelte erste Periodenlänge (P1.1).

9. Induktive Positionsmesseinrichtung gemäß einem der vorhergehenden Ansprüche, wobei die Summe aus einer Breite (BS) eines Steges (2.11) und einer Breite (BL) einer dazu benachbarten Lücke (2.12) ungleich der Summe aus einer Breite (BS) eines anderen Steges (2.11) und einer Breite (BL) einer dazu benachbarten Lücke (2.12) ist.

10. Induktive Positionsmesseinrichtung gemäß einem der vorhergehenden Ansprüche, wobei die erste Periodenlänge (P1.1) größer ist als die größte Breite (BS) eines Steges (2.11) und / oder größer ist als die größte Breite (BL) einer Lücke (2.12).

11. Induktive Positionsmesseinrichtung gemäß einem der vorhergehenden Ansprüche, wobei jeder Steg (2.11) eine gleich große Breite (BS) aufweist.

**Claims**

1. Inductive position measuring device, which has a scanning element (1) and a graduation element (2; 2'), wherein the graduation element (2; 2') is arranged so as to be displaceable relative to the scanning element (1) in a first direction (X), and

- the scanning element (1)

  - has at least one excitation line (1.3),
  - has a first receiver track (1.1), which comprises at least one receiver line (1.11, 1.12, 1.13, 1.14), which runs along the first direction (X) in accordance with a first periodic pattern and extends at least over a length (L), wherein the first periodic pattern has a first period length (P1.1) and
  - has a second receiver track (1.2), which comprises at least one receiver line (1.21, 1.22), which runs along the first direction (X) in accordance with a second periodic pattern and extends at least over the same length (L), wherein the second periodic pattern has a second period length (P1.2), wherein
  - the first period length (P1.1) is not equal to the second period length (P1.2), wherein

- the graduation element (2; 2') comprises a graduation track (2.1; 2.1'), which has graduation structures, formed of webs (2.11; 2.11') and gaps (2.12, 2.12'), along the first direction (X), wherein

  - the webs (2.11; 2.11') have different widths (BS) in the first direction (X) or
  - the gaps (2.12, 2.12') have different depths (HL) or have different widths (BL) in the first direction (X), wherein

the position measuring device is configured such that an electromagnetic field generated by the graduation track (2.1, 2.1') of the at least one excitation line (1.3) can be modulated, wherein

  a first signal (S1.1) with the first period length (P1.1) can be generated by the receiver line (1.11, 1.12, 1.13, 1.14) of the first receiver track (1.1) and
  a second signal (S1.2) with the second period length (P1.2) can be generated by the receiver line (1.21, 1.22) of the second receiver track (1.2), wherein

n times the first period length (P1.1) is equal to m times the second period length (P1.2), wherein m and n are co-prime and n times the first period length (P1.1) and m times the second period length (P1.2) is less than or equal to the length (L).

2. Inductive position measuring device according to Claim 1, wherein the first receiver track (1.1) has at least two receiver lines (1.11, 1.12, 1.13, 1.14), by means of which first signals (S1.1) each with the first period length (P1.1) can be generated.

3. Inductive position measuring device according to Claim 1 or 2, wherein the second receiver track (1.2) has at least two receiver lines (1.21, 1.22), by means of which a respective second signal (S1.2) with the second period length (P1.2) can be generated.

4. Inductive position measuring device according to one of the preceding claims, wherein the receiver tracks (1.1, 1.2) are arranged one above the other in a second direction (Y) oriented orthogonal to the first direction (X) .

5. Inductive position measuring device according to one of the preceding claims, wherein the at least one receiver line (1.21, 1.22) of the second receiver track (1.2) extends over at least three times the second period length (P1.2).

6. Inductive position measuring device according to one of the preceding claims, wherein the first period length (P1.1) is smaller than the second period length (P1.2) and the second receiver track (1.2) is arranged at a greater distance from the graduation element (2, 2') than the first receiver track (1.1) in a second direction (Y) oriented orthogonal to the first direction (X).

7. Inductive position measuring device according to one of the preceding claims, wherein the graduation element (2; 2') has a shape that is rotationally symmetrical about an axis (A) oriented parallel to the first direction (X).

8. Inductive position measuring device according to one of the preceding claims, wherein the graduation element (2; 2') has at least one extent (M, M') in the first direction (X), said extent being greater than the length (L) plus double the first period length (P1.1).

9. Inductive position measuring device according to one of the preceding claims, wherein the sum of a width (BS) of a web (2.11) and a width (BL) of an adjacent gap (2.12) is not equal to the sum of a width (BS) of another web (2.11) and a width (BL) of an adjacent gap (2.12).

10. Inductive position measuring device according to one of the preceding claims, wherein the first period length (P1.1) is greater than the greatest width (BS) of a web (2.11) and/or is greater than the greatest width (BL) of a gap (2.12).

11. Inductive position measuring device according to one of the preceding claims, wherein each web (2.11) has an identical width (BS).

## Revendications

1. Dispositif de mesure de position par induction qui comporte un élément de balayage (1) et un élément de séparation (2 ; 2'), l'élément de séparation (2 ; 2') étant disposé de manière déplaçable par rapport à l'élément de balayage (1) dans une première direction (X), et

l'élément de balayage (1) comportant

- au moins une ligne d'excitation (1.3),
- une première piste de réception (1.1) qui comprend au moins une ligne de réception (1.11, 1.12, 1.13, 1.14) qui s'étend selon un premier motif périodique suivant la première direction (X) et s'étendant au moins sur une longueur (L), le premier motif périodique ayant une première longueur de période (P1.1) et
- une deuxième piste de réception (1.2) qui comprend au moins une ligne de réception (1.21, 1.22) qui s'étend selon un deuxième motif périodique suivant la première direction (X) et qui s'étend au moins sur la même longueur (L), le deuxième motif périodique ayant une deuxième longueur de période (P1.2),
- la première longueur de période (P1.1) n'étant pas égale à la deuxième longueur de période (P1.2),

l'élément de séparation (2 ; 2') comprenant une piste de séparation (2.1 ; 2.1') qui comporte des structures de séparation suivant la première direction (X) qui sont formées à partir de nervures (2.11 ; 2.11') et d'intervalles (2.12, 2.12'),

- les nervures (2.11, 2.11') ayant des largeurs (BS) différentes dans la première direction (X) ou
- les intervalles (2.12 ; 2.12') ayant des profondeurs (HL) différentes ou des largeurs (BL) différentes dans la première direction (X),

le dispositif de mesure de position étant conçu de telle sorte qu'un champ électromagnétique généré par la piste de séparation (2.1, 2.1') de l'au moins une ligne d'excitation (1.3) puisse être modulé, un premier signal (S1.1) ayant la première longueur de période (P1.1) pouvant être généré par la ligne de réception (1.11, 1.12, 1.13, 1.14) de la première piste de réception (1.1) et un deuxième signal (51.2) ayant la deuxième longueur de période (P1.2) pouvant être généré par la ligne de réception (1.21 , 1.22) de la deuxième piste de réception (1.2),

n fois la longueur de la première longueur de période (P1.1) étant égale à m fois la deuxième longueur de période (P1.2), m et n étant premiers entre eux et n fois la première longueur de période (P1.1) ou m fois la deuxième longueur de période (P1.2) étant inférieure ou égale à la longueur (L).

2. Dispositif de mesure de position par induction selon la revendication 1, la première piste de réception (1.1) comportant au moins deux lignes de réception (1.11, 1.12, 1.13, 1.14), par le biais desquelles des premiers signaux (S1.1) peuvent être générés qui ont chacun la première longueur de période (P1.1).

3. Dispositif de mesure de position par induction selon la revendication 1 ou 2, la deuxième piste de réception (1.2) comportant au moins deux dispositifs de réception (1.21, 1.22), par le biais desquels un deuxième signal (S1.2) peut être généré qui a la deuxième longueur de période (P1.2).

4. Dispositif de mesure de position par induction selon l'une des revendications précédentes, les pistes de réception (1.1, 1.2) étant disposées les unes au-dessus des autres dans une deuxième direction (Y) qui est orthogonale à la première direction (X).

5. Dispositif de mesure de position par induction selon l'une des revendications précédentes, l'au moins une ligne de réception (1.21, 1.22) de la deuxième piste de réception (1.2) s'étendant sur au moins trois fois la deuxième longueur de période (P1.2).

6. Dispositif de mesure de position par induction selon l'une des revendications précédentes, la première longueur de période (P1.1) étant inférieure à la deuxième longueur de période (P1.2) et la deuxième piste de réception (1.2) étant disposée dans une deuxième direction (Y), qui est orientée orthogonalement à la première direction (X), à une plus grande distance de l'élément de séparation (2, 2') que la première piste de réception (1.1).

7. Dispositif de mesure de position par induction selon l'une des revendications précédentes, l'élément de séparation (2 ; 2') ayant une forme à symétrie de rotation autour d'un axe (A) qui est orienté parallèlement à la première direction (X).

8. Dispositif de mesure de position par induction selon l'une des revendications précédentes, l'élément de séparation (2 ; 2') comportant dans la première direction (X) au moins une extension (M, M') qui est supérieure à la longueur (L) plus deux fois la première longueur de période (P1.1).

9. Dispositif de mesure de position par induction selon l'une des revendications précédentes, la somme d'une largeur (BS) d'une nervure (2.11) et d'une largeur (BL) d'un intervalle (2.12) adjacent à celle-ci n'étant pas égale à la somme d'une largeur (BS) d'une autre nervure (2.11) et d'une largeur (BL) d'un intervalle (2.12) adjacent à celle-ci.

10. Dispositif de mesure de position par induction selon l'une des revendications précédentes, la première longueur de période (P1.1) étant supérieure à la plus grande largeur (BS) d'une nervure (2.11) et/ou étant supérieure à la plus grande largeur (BL) d'un intervalle (2.12) .

11. Dispositif de mesure de position par induction selon l'une des revendications précédentes, toutes les nervures (2.11) étant de même largeur (BS).

Fig. 1

Fig. 2

**Fig. 3**

**Fig. 4**

**Fig. 5**

**Fig. 6**

EP 4 279 874 B1

Fig. 7

Fig. 8

Fig. 9 E - E

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 10480961 B2
- WO 03074977 A1
- US 4757244 B1
- US 20190170494 A1